(19) Europäisches Patentamt
European Patent Office
Office européen des brevets

(11) EP 1 235 099 A1

(12) # EUROPEAN PATENT APPLICATION
published in accordance with Art. 158(3) EPC

(43) Date of publication:
**28.08.2002 Bulletin 2002/35**

(21) Application number: **99974024.4**

(22) Date of filing: **30.11.1999**

(51) Int Cl.[7]: **G02F 1/1333**

(86) International application number:
**PCT/JP99/06718**

(87) International publication number:
**WO 01/040851 (07.06.2001 Gazette 2001/23)**

(84) Designated Contracting States:
**AT BE CH CY DE DK ES FI FR GB GR IE IT LI LU MC NL PT SE**
Designated Extension States:
**AL LT LV MK RO SI**

(71) Applicant: **Hitachi, Ltd.**
**Chiyoda-ku, Tokyo 101-8010 (JP)**

(72) Inventors:
- **MIWA, Takao**
  **Hitachi Research Lab. of Hitachi, Ltd.**
  **Hitachi-shi Ibaraki 319-1292 (JP)**
- **HOJO, Fusao**
  **Hitachi Research Lab. of Hitachi, Ltd.**
  **Hitachi-shi Ibaraki 319-1292 (JP)**
- **OKABE, Yoshiaki**
  **Hitachi Res. Lab. of Hitachi, Ltd.**
  **Hitachi-shi Ibaraki 319-1292 (JP)**
- **YAMADA, Shinji Hitachi Res. Lab. of Hitachi, Ltd.**
  **Hitachi-shi Ibaraki 319-1292 (JP)**
- **UENO, Takumi Hitachi Res. Lab. of Hitachi, Ltd.**
  **Hitachi-shi Ibaraki 319-1292 (JP)**
- **SATOU, Toshihiro**
  **Electron Tube & Devices Division**
  **Mobara-shi Chiba 297-0037 (JP)**

(74) Representative: **Beetz & Partner Patentanwälte**
**Steinsdorfstrasse 10**
**80538 München (DE)**

(54) **LIQUID-CRYSTAL DISPLAY AND RESIN COMPOSITION**

(57) An liquid crystal display comprising

(1) a first substrate and second substrate holding a liquid crystal layer in-between,
(2) a thin film transistor formed on said first substrate connected to the pixel electrode formed on said liquid crystal layer,
(3) a flattening insulator between said pixel electrode and said thin film transistor, and
(4) a contact hole formed on said flattening insulator;
wherein said flattening insulator is formed by the plastic composition which is expressed by the general formula (1), (2) or (3) (where $Ar_1$ in the formula is selected from among (I), (II) and (III) and can be used independently or in combination; and $Ar_2$ is selected from among (IV), (V), (VI), (VII) and (VIII) and can be used independently or in combination; I in general formula (1) is an integer $3 \leq I \leq 1000$, m and n are integers of $2 \leq m, n \leq 100$, and X represents a base having a polymerizable multiple bond).

This plastic compound is characterized by a high degree of transparency in visible light area, excellent flattening properties and resistance against resist stripper. Consequently, a liquid crystal display featuring a high contrast and minimum deterioration in picture quality is provided by use of said plastic compound as a flattening insulator of the liquid crystal display.

EP 1 235 099 A1

Printed by Jouve, 75001 PARIS (FR)

(Cont. next page)

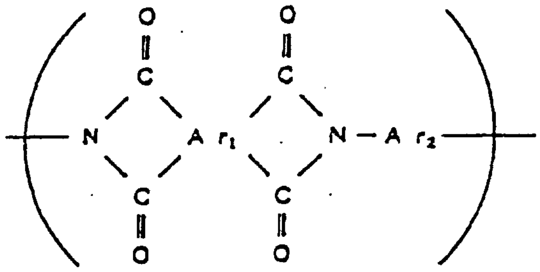

(1)

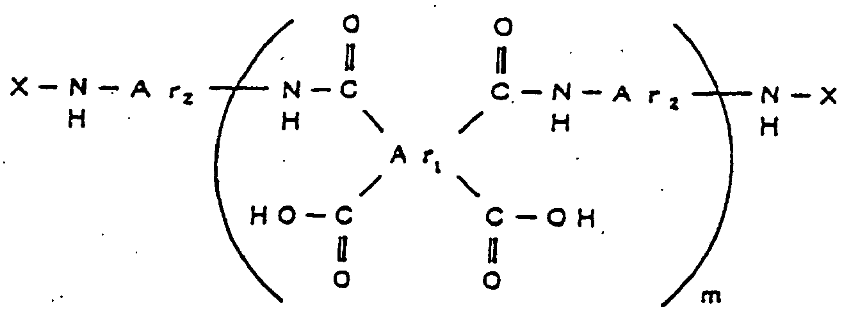

(2)

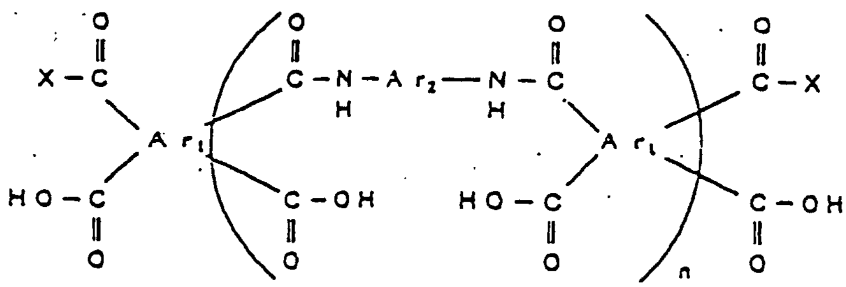

(3)

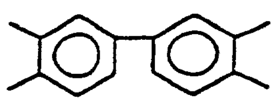

(I)



(Cont. next page)

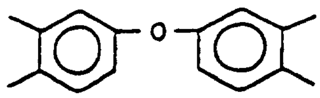

(II)

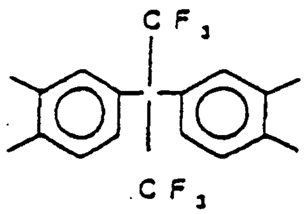

(III)

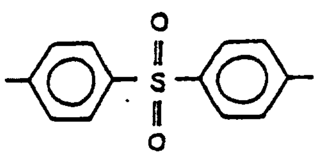

(IV)

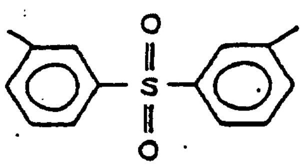

(V)

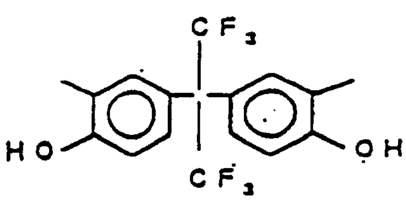

(VI)

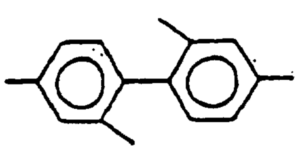

(VII)



(Cont. next page)

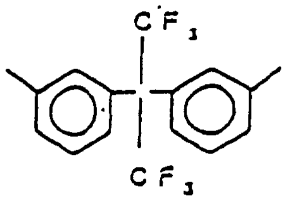

(VIII)

FIG. 1

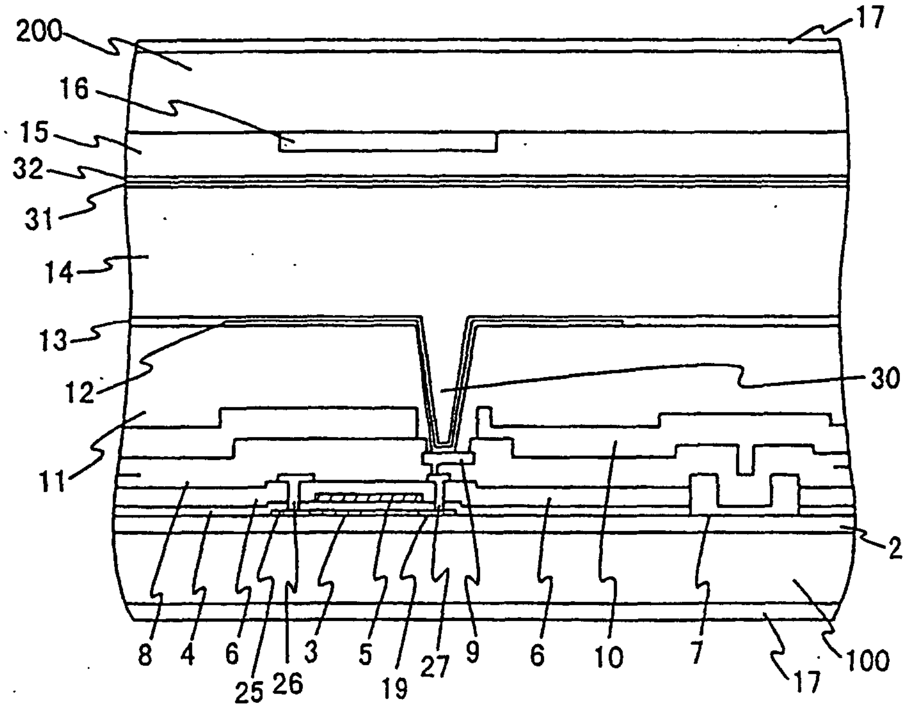

## Description

BACKGROUND OF THE INVENTION

The present invention relates to the liquid crystal display which is characterized by a high degree of transparency in the visible light area to provide a high contrast. It also relates to the plastic composition which has an excellent flattening characteristic sufficient for use as an insulator of the liquid crystal display, said composition being highly resistant to resist strippers.

An active matrix liquid crystal display has transparent substrates laid out at opposite positions through a liquid crystal layer. One of said transparent substrates has transparent pixel electrodes and thin film transistors, and forms each pixel area in matrix. For example, a gate signal line to commonly turn on thin film transistors laid in parallel in the column direction (x direction), and a drain signal line to supply video signals to the corresponding pixel electrode through said turned-on transistors are formed on the transparent substrate equipped with transparent pixel electrodes and thin film transistors. In this case, said gate signal is extended in the X direction, and is formed in parallel to the Y direction. Said drain signal line is extended in the Y direction, and is formed in parallel to the X direction. While each area enclosed by each of these signal lines is used as a pixel area, pixel electrodes are formed occupying a greater portion of this pixel area and thin film transistors are formed in one portion of this pixel area. A positive stagger structure is known for said thin film transistor, where said stagger structure is provided with a semiconductor layer comprising silicone, and said gate signal line constituting the gate electrode is formed on the upper layer of said semiconductor layer. When the polysilicone characterized by high mobility and capability of constituting a circuit with a C-MOS (complementary MOS) transistor is used as a semiconductor layer of the thin film transistor, a liquid crystal driven circuit (vertical scanning circuit and video signal drive circuit) can be built around the video display area on one of the transparent substrates laid out at opposite positions through a liquid crystal. A liquid crystal display using an amorphous silicone as the semiconductor layer of the thin film transistor is also put into commercial use.

The liquid crystal drive circuit in this case is created as a separately packaged LSI, and is installed on the peripheral portion of the display panel according to TAB (Tape Automated Bonding) technology or the like.

In the liquid crystal display, the flatness of the insulator formed under the pixel electrode is an important factor affecting the display characteristics. In other words, when there are large irregularities on the surface of said insulator, uneven rubbing will occur in the process of rubbing the oriented film for liquid crystal, and will result in display failure including leakage of light. In light orientation, inclination on the irregular portion causes an orientation error. Furthermore, the irregularities directly affect the variation in the thickness of liquid crystal layer when the liquid crystal is filled, and cause display failures.

In order to get a high contrast according to the prior art, a light protecting means is provided to avoid transmission of light through the unevenly rubbed area at the sacrifice of exposed area ratio. A stacked wire structure is effective in improving the exposed area ratio, but the liquid crystal display designed to have such a structure will have a particularly severe requirements for flattened insulators formed under the pixel electrode.

Insulators for flattening are required to provide greater transparency in the visible light area. Reduction in transparency leads to reduced display brightness and reduced color tone balance, resulting in a big problem in picture quality.

According to the prior art, inorganic films such as silicon oxide and silicon nitride have been often used as materials for liquid crystal display insulator. Despite excellent insulation characteristics, however, such inorganic films do not provide satisfactory flatness on the underlying different levels. When they are used as insulators of the oriented film, orientation disorder occurs at the different level, disabling a high contrast of liquid crystal display.

The organic insulator is superior to the inorganic insulator in flattening characteristics, so it is also used as an underlying insulator of the oriented film of the liquid crystal display. For example, Official Gazette of Japanese Patent Laid-Open NO.117424/1992 discloses polyimide as a polymer which provides flatness. Furthermore, Official Gazette of Japanese Patent Laid-Open NO.133427/1990 and Official Gazette of Japanese Patent Laid-Open NO.199124/1990 disclose the sulfon-based polyimide with amine component of sulfonediamonodiphenyl sulfon. Official Gazette of Japanese Patent Laid-Open NO.246515/1991 discloses sulfon-based polyimide used for the positive substrate where the transparent electrode is formed. However, the resistance of these polyimides to resist stripper is not sufficient.

A liquid crystal display with organic insulator characterized by both flatness and transparency is mentioned in U.S. Patent NO.5641974 and Official Gazette of Japanese Patent Laid-Open NO.22028/1997, which discloses use of photosensitive resins such as acrylic resin, epoxy-based resin or benzocyclobutene film (BCB). However, these photosensitive resins includes substances which are subjected to reaction due to light. So they are essentially inferior in transparency, chemical stability, weatherability and resistance to light. As a result, they are less stable to light, and color tone is deteriorated when they are used for a long time. Also the photosensitive agent is eluted in liquid crystal to deteriorate display characteristics. These problems are waiting for solution. The liquid crystal display having non-photosensitive organic insulator is disclosed in Official Gazette of Japanese Patent Laid-Open NO.22028/1997, and

Digest of technical papers, International workshop on ACTIVE-MATRIX LIQUID-CRYSTAL DISPLAYS 1996, P.149, 1996, Kobe, Japan. However, benzocyclobutene (BCB) polymer used as an organic insulator exhibits remarkable coloration in the insulator forming process, and a sufficient brightness and color tone cannot be obtained; this raises a problem of insufficient resistance to light. Non-photosensitive acrylic resin and epoxy-based resin also have problems in that they are insufficient in resistance to heat, chemical stability, weatherability and resistance to light. In the liquid crystal display using such a material for insulator, wrinkles occur to the insulator in pixel electrode formation process, disabling satisfactory display. In the use of a projector when strong light is applied, there is a problem of discoloration according to the length of the service time.

One of the objects of the present invention is to provide a liquid crystal display which ensures a high contrast and stable display with the minimum picture quality deterioration. Another object of the present invention is to provide a plastic composition suited for use in the flattening insulator for liquid crystal display, where said composition is characterized by a high degree of transparency in the visible light area an excellent flattening characteristic, and a high degree of resistance to resist strippers.

SUMMARY OF THE INVENTION

The following describes the embodiment according to the present invention:

The first embodiment with an arrangement of transistor elements is a liquid crystal display comprising

(1) a first substrate and second substrate holding a liquid crystal layer in-between,
(2) a thin film transistor on said first substrate,
(3) a pixel electrode on the surface of said liquid crystal layer located on the side of said first substrate,
(4) a flattening insulator between said pixel electrode and said thin film transistor, and
(5) a contact hole on said flattening insulator for connection of said pixel electrode with said thin film transistor, wherein said contact hole is used for electric connection between said pixel electrode and said thin film transistor.

Said liquid crystal display where said flattening insulator consists of a plastic composition containing polymer which has a structural unit expressed by the general formula (1) (where $Ar_1$ in the formula is selected from among (I), (II) and (III) and can be used independently or in combination; and $Ar_2$ is selected from among (IV), (V), (VI), (VII) and (VIII) and can be used independently or in combination, with "I" representing an integer of $3 \leq I \leq 1000$).

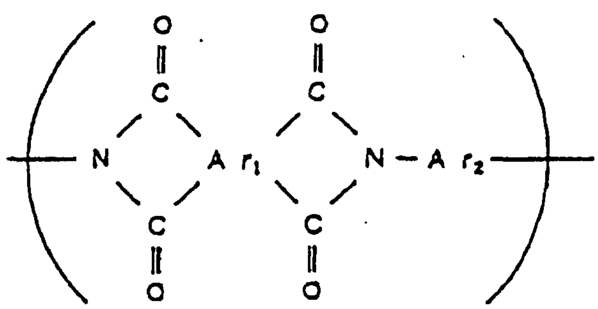

(1)

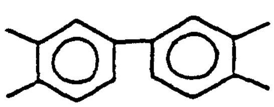

(I)

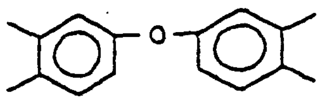

(II)

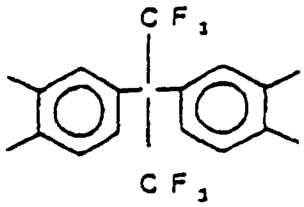

(III)

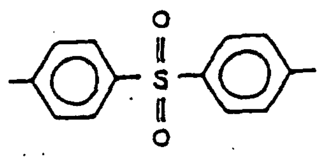

(IV)

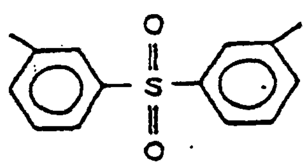

(V)

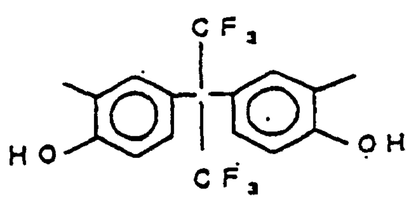

(VI)

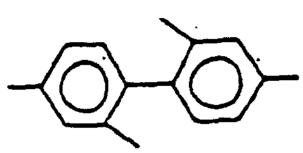

(VII)

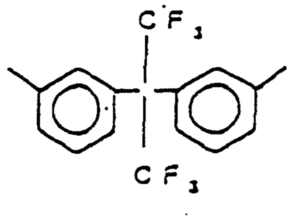

(VIII)

The second embodiment of the present invention is a liquid crystal display comprising a plastic composition containing a high polymer which has a structural unit where said flattening insulator is expressed by the general formula (2) or (3) (where $Ar_1$ in the formula is selected from among (I), (II) and (III) and can be used independently or in combination; and $Ar_2$ is selected from among (IV), (V), (VI), (VII) and (VIII) and can be used independently or in combination; m and n are integers of $2 \leq m, n \leq 100$, and X represents a base having a polymerizable multiple bond).

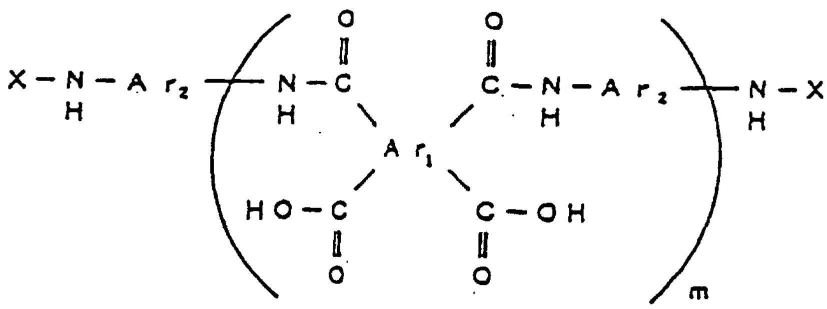

(2)

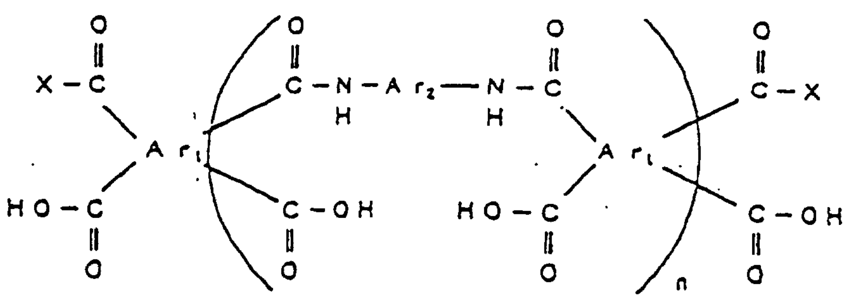

(3)

The third embodiment of the present invention is characterized in that $Ar_1$ in the formula (1) is selected from said (I) and (II), and $Ar_2$ is selected from said (IV) or (V).

The fourth embodiment of the present invention is characterized in that 50 mol percent or more of $Ar_1$ is used in said (I) in said third embodiment.

The fifth embodiment of the present invention is characterized in that $Ar_1$ in general formula (2) or (3) is selected from said (I) and (II), and $Ar_2$ is selected from said (IV) or (V) in said second embodiment.

The sixth embodiment of the present invention is characterized in that 50 mol percent or more of $Ar_1$ is used in said (I) in said fifth embodiment.

The seventh embodiment of the present invention is characterized in that the X in general formula (2) or (3) in said second embodiment is replaced by the following X.

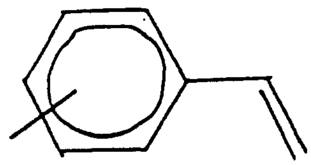

(IX)

The present invention also provides a plastic composition suited for use in the flattening insulator of the liquid crystal display.

The first embodiment of the plastic composition according to the present invention has a structure unit expressed by the general formula (2) or (3) (where $Ar_1$ in the formula is selected from among (I), (II) and (III) and can be used independently or in combination; and $Ar_2$ is selected from among (IV), (V), (VI), (VII) and (VIII) and can be used independently or in combination; m and n are selected from the integers of $2 \leq m, n \leq 100$, and X represents (IX)).

The second embodiment of the plastic composition according to the present invention is characterized in that, in the first embodiment of said plastic composition, $Ar_1$ in the general formula (2) or (3) is selected from said (I) and (II), and $Ar_2$ is selected from said (IV) or (V).

The third embodiment of the plastic composition according to the present invention can be implemented when 50 mol % or more of $Ar_1$ in the general formula (2) or (3) is used in said (1) in the second embodiment of said plastic composition.

The following describes how polyimide resins shown in general formulae (1), (2) and (3) have been found out for use in the flattening insulator of the liquid crystal display:

Polyimide resin provides an excellent material featuring a high resistance to heat and satisfactory chemical stability, but many of polyimide resins absorb in the visible area, and are not suited for use in liquid crystal display. Its flatness is also unsatisfactory.

Absorption of polyimide in the visible light area is caused by charge transfer absorption between acid dianhydride as a monomer component of polyimide and diamine component. Consequently, improvement of transparency can be considered to be achieved by reduction of charge transfer. Based on this line of thought, we have used aliphatic acid dianhydride or aliphatic diamine which does not cause charge transfer as a monomer, and obtained polyimide having a high degree of transparency in the visible light area. However, the flattening performance of the polyimide containing an aliphatic component is on the same level as that of the polyimide used in the buffer coat of the LSI according to the prior art. This has been found out to be insufficient for use in the flattening insulator of the liquid crystal display. The authors of the present invention have studied various types of aromatic diamine and acid dianhydride, and have found out that compatibility between transparency in the visible light area and flattening characteristics can be ensured when the polyimide polymer which has a structural unit expressed by the general formula (1) is used. The degree of polymerization of said polyimide polymer is preferred to be 3 or more. If it is less than 3, the formed insulator will be brittle, and a sufficient mechanical strength cannot be obtained. There is no restriction to the upper limit of the degree of polymerization. Polyimidepolymer can be used if it has the degree of polymerization which is obtained from normal chemical synthesis where the acid dianhydride equivalent to diamine component in terms of stoichiometric ratio is made to react in polarity solvent. The authors have found out that the polyimide has an extremely high degree of flattening characteristics when 4, 4'-diaminediphenylsulfon (p-DDSO) and 3, 3'-diaminodiphenylsulfon (m-DDSO) are used as diamine component, and 3, 3', 4, 4'-oxydiphthalic dianhydride (ODPA) and 3, 3', 4, 4/-biphenyl tetracarboxylate dianhydride (BPDA) are employed as acid dianhydride component. Flattening characteristics are particularly improved especially when 3, 3', 4, 4'-oxydiphthalic dianhydride (ODPA) is used.

A liquid crystal display featuring a high aperture rate can be obtained by using these polyimides as flattening insulators to provide patterning according to the two-layer resist method where the inorganic film is used as etching mask. The two-layer resist method provides a means of patterning which is suited for use in micro-processing of polyimide. An inorganic film serving as an etching mask of polyimide is formed on the polyimide film, and the resist method is further used to provide patterning of said inorganic film.

In production of the liquid crystal display, various types of silicone based acid dianhydride and silicone based diamine can be used partly as a monomer, or these silicone based monomers can be mixed with the polymer as component in order to promote adhesion to the flattening insulator substrate, if this does not deteriorate the intended characteristics of the polyimide. Especially use of the silicone monomer provides drastic improvement of reliability of adhesion with liquid crystal, without flatness, transparency and process ability, if diamine component or acid dianhydride does not exceed 10 mol percent.

It should be noted that industrial benefits will be greatly improved patterning if the resist can be used directly as an etching mask, without using the inorganic film as an etching mask.

So the polyamide acid solution as precursor of polyimide was spin-coated on the glass substrate where thin

film transistor was formed, and was dried at the temperature of 80 degrees Celsius for 3 minutes. Then it was cured on the hot plate having a temperature of 350 degrees Celsius for ten minutes. Resist was used for patterning of the polyimide having a thickness of 2 microns in the concave portion (Embodiment 5). When the resist using mono-ethanol amine or 502A (by Tokyo Ohka Kogyo Co., Ltd.) was separated, the polyimide layer was swollen or separated, and the intended patterning could not be obtained.

Furthermore, to improve the resistance of polyimide against resist stripper, curing temperature and curing time were changed during the experiments, but the result was unsatisfactory; transparency was reduced by higher temperature and longer time. The authors made further studies on the resistance against resist stripper, and a satisfactory result could be obtained by introducing the reactive multiple bonded group into the terminal of the polyamide acid which is the precursor of the polyimide featuring satisfactory transparency and flatness. There is no particular restriction to the structure of said reactive multiple bonded group; however, use of styrene derivative, nuggic(???) derivative, phenylacetylene derivative and maleic derivative is preferred from the viewpoint of the resistance of the flattening insulator against heat obtained in the final stage.

The structure of general formula (2) is obtained from reaction between polyamide acid at the terminal of amine and acid derivative of reactive multiple bonded group.

The structure of general formula (3) is obtained from reaction between polyamide acid at the terminal of acid dianhydride and amine derivative of said reactive multiple bonded group. Especially when styryl group is used as a crosslinking component, excellent resistance against resist stripper was gained. Comparative study of flattening insulator having a repetitive structure has indicated that flatness can be further improved by introduction of the reactive multiple bonded group.

The degree of polymerization of the polymer having a structural unit expressed in general formula (2) and general formula (3) is preferred to be 2 to 100, and is particularly preferred to be 5 to 50. If the degree of polymerization is below 2, transparency and mechanical characteristics are deteriorated. If the degree of polymerization is not less than 50, resistance against resist stripper will be reduced. Replacement by biphenyl tetracarboxylate dianhydride (BPDA) is effective in improving the resistance against resist stripper, while with maintaining excellent flattening characteristics.

As discussed above, introduction of reactive multiple bonded group is effective in improving resistance against resist stripper and flatness for the plastic composition containing the polymer having the structure unit expressed in general formulae (2) and (3).

Crosslinking reaction by the reactive multiple bonded group occurs simultaneously in the heating process of introducing imide after formation of films from polyamide acid by spin coating method. This does not required addition of a radical generator. However, a combined use of an additive such as an radical generator is allowed if it does not deteriorate polyimide characteristics. A normal air circulating hot air furnace or hot plate setting device can be used for thermosetting. There is no restriction to the type of the device or atmosphere.

In patterning of the polyimide, it is possible to directly use the general patterning method of the prior art using the resist for polyimide without superior transparency and flatness. In other words, resist is applied on thermoset polyimide film, and the pattern exposed and developed through the mask is used as an etching mask. After transferring the pattern onto the polyimide by wet etching or dry etching, the specified resist stripper is used to remove the resist, thereby getting the polyimide film having the intended form.

Use of hydrazine-based etchant for wet etching is a common practice. There is no restriction as to the use of wet or dry etching. Dry etching is more suited to get micro-patterns.

Dry etching conditions of general polyimide can be directly used as gases, devices and conditions used in dry etching. Mixture of halogen based gas is preferred when silicone-based components are contained in the polyimide.

A wide ranging taper angle of the polyimide pattern obtained by dry etching can be gained by controlling the taper angle of the resist material to be used and resist material pattern.

When the ratio of polyimide and resist etching speed is assumed as S, the cross section of an almost perpendicular pattern is obtained if etching of the resist is more difficult than polyimide (greater S). Meanwhile, if the used resist has a small S, the cross section of the resist is transferred to the polyimide. Consequently, the cross sectional of the specified polyimide pattern can be obtained by controlling the cross sectional shape of the resist by baking and others after exposure.

To improve aperture ratio on the liquid crystal display, it is more advantageous to have a greater taper angle of the hole and trench portion in order to expand the flat area to the maximum possible range. Meanwhile, when the hole portion is metallized, the cross section having an extremely perpendicular form results in slope excavation(???); this is not preferable. The cross section of the pattern of the flattening insulator in the liquid crystal display according to the present invention is determined by the balance.

Micro-patterning depends on the resist material, aligner and etching system to be used, and there is no subjected to restriction due to application to the present invention.

In the liquid crystal display, there is a strong demand for flatness of the oriented film coated surface. In other

words, if there are irregularities on the oriented film surface, a portion called domain where crystal orientation is irregular will be created on that surface, and this will result in deteriorated display quality such as light leakage. Deterioration of display quality can be reduced by installation of a light proof layer on the domain. However, use of this method directly signifies reduction of aperture ratio. Reduction of aperture ratio leads to reduction of pixel pitch. The pixel pitch is greater as liquid crystal display has a higher definition. This is important especially for the view finder as a TFT type liquid crystal display using polysilicone, head mount display, projector, etc. already designed in compact size.

BRIEF DESCRIPTION OF THE DRAWINGS

Figure 1 is a side elevation view in cross section representing one embodiment of the liquid crystal display according to the present invention;
Figure 2 is a perspective view representing the liquid crystal display of the embodiment according to the present invention; and
Figure 3 is a cross sectional view representing the substrate used in the evaluation test to evaluate flattening characteristics of the flattening insulator.

DETAILED DESCRIPTION OF THE INVENTION

Figure 1 is a side elevation view in cross section representing one embodiment of the liquid crystal display according to the present invention. Figure 2 is the perspective view where the liquid crystal layer is not illustrated.
With reference to these drawings, the following describes the liquid crystal display as one embodiment of the present invention:
The liquid crystal display of the present embodiment has a first substrate 100 and a second substrate 200, holding a liquid crystal layer 14 in-between. A thin film transistor 23 is formed on the first substrate 100.
The thin film transistor (TFT) 23 has a source electrode 19 and drain electrode 25 on one and the same plane, and a semiconductor layer (channel layer) 3 is located between the source electrode and drain electrode. It also have a gate electrode 5 which is close to the semiconductor layer 3, but is insulated by a gate insulator (second insulator) 4. Figure 1 shows an electrode 26 and electrode 27 as signal lines connected to the thin film transistor.
An oriented film 13 and a pixel electrode (ITO film) 12 are formed on the surface on the first substrate side of the liquid crystal layer 14. The pixel electrode 12 is connected to the source electrode 19 through an intermediate metal layer 9 and electrode 27. A flattening insulator 11 is installed between the electrode 12 and thin film transistor. A contact hole 30 is formed on the flattening insulator 11 to connect the pixel electrode 12 to the intermediate metal layer 9.
The following shows the further description of the liquid crystal display of Figures 1 and 2 in the present embodiment of the present invention: The first substrate 100 consists of a "transparent" glass substrate of quartz. where word "transparent" means being transparent with respect to visible light. Transparency is preferred to be as high as possible. A first insulator 2 comprising the HLD (high temperature low pressure decomposition): low pressure CVD) is provided on the surface of the first substrate 100. Said thin film transistor is formed thereon. Semiconductor layer 3 constituting a part of the thin film transistor is made of silicone film. Gate insulator (second insulator) 4 is made of silicone oxide ($SiO_2$) film. Gate electrode 5 is made of polycrystalline silicone film, and a film consisting of two layers of a HLD film and PSG film (phosphosilicate glass) is formed as a third insulator 6 on the gate electrode 5. A 4th insulator 8 is formed on the third insulator 6 according to the CVD method, using TEOS (tetra ethoxy silane) as material. A passivation film 10 made of silicon nitride is-formed on the 4th insulator 8. The other end of the electrode 27 connected to the source electrode is connected to the intermediate metal layer 9 comprising molybdenum silicide, and the intermediate metal layer 9 is connected to the pixel electrode 12. Numeral 7 denotes an aluminum wire. The level difference between the intermediate metal layer 9 and passivation film 10 is 1.0 micron. A flattening insulator 11 is formed on the passivation film 10. Pixel electrode (ITO film) 12 consisting of indiumtin oxide is formed on the flattening insulator 11, and oriented film 13 is rubbed thereon.
The second substrate 200 is made of quartz glass. A black matrix 16, overcoat film 15 to maintain flatness of the black matrix, electrode (ITO film) 32 and oriented film 31 are formed on the second substrate. A liquid crystal film 14 is formed between oriented film 13 on the substrate 100 and oriented film 31 on the second substrate 200.
A deflection plate 17 is formed on the other surfaces of the first substrate 100 and second substrate 200.
In the liquid crystal display of the present embodiment light supplied from the back of the deflection plate 17 formed on the side of the first substrate 100 passes through the deflection plate 17, and goes out of the deflection plate 17 formed on the second substrate side through liquid crystal layer 14. The light is viewed by the user. The pixel electrode 12 works with the electrode (ITO film) 32 on the second substrate side, and applies voltage to the liquid

crystal layer 14 on the selective basis. This voltage is creates an image, which is viewed by the user from the front of the display.

The following describes the embodiment according to the present invention:

[Embodiment 1]

After 3, 3', 4, 4'-oxydiphthalic dianhydride (0.10 mol) was dissolved in maleic acid anhydride, 3, 3'-diaminodiphenylsulfon (0.10 mol) was gradually added to it under cooling by ice, and was left to react with each other for five hours, thereby obtaining polyamic acid solution.

Said polyamic acid solution was coated on the quartz substrate by spin coating method, and was dried on a hot plate at 80 degrees Celsius for 3 minutes. Then it was heated on the hot plate having a temperature of 300 degrees Celsius for ten minutes to get a 2-micron thick polyimide film. Measurement of the visible ultraviolet absorption spectrum of said film has shown that the transmittivity is 90% or more at the wavelength from 430 nm to 900 nm (a measuring limit of the instrument). Said film has the preferable transparency as a flattening insulator of the liquid crystal display.

To ensure that thickness after introduction of imide would become 12 microns at the concave portion, said polyamic acid solution was coated on the glass substrate 1000 where multiple aluminum patterns 70 having a height of 1 micron and width of 4 microns were formed, as shown in Figure 3. Then it was dried on the hot plate at 80 degrees Celsius for 3 minute. After that, it was heated on the hot plate at 300 degrees Celsius for ten minutes to get a polyimide film. The level difference of the ??? surface was measured. It has been shown that the level difference of the surface is 0.062 micron, exhibiting an excellent flattening characteristic. This experiment has shown that use of said polyimide film as a flattening insulator ensures excellent flatness on the pixel electrode and a high contrast; it provides a liquid crystal display which ensures a stable display for a long time even when exposed to strong light.

Said polyamic acid solution was coated on the passivation film 10 of the liquid crystal display in Figure 1, to form a flattening insulator 11 so that the film thickness would be 2 microns at the convex portion. The surface irregularities of the flattening insulator in this case was 0.04 microns. A 0.15-micron thick silicone oxide layer was formed on this surface according to the plasma CVD method, using the material of $SiH_4$ and $N_2O$. Normal positive resist was coated thereon to a thickness of about 0.15 micron to expose and develop the contact hole 30. Thus, a silicone oxide hole pattern was formed using this resist pattern as a mask, according to the reactive ion etching (RIE) method utilizing $CF_4$ gas. The hole pattern is 3 microns square on the stop and 2 microns on the bottom. Then the flattening insulator 11 was patterned using the similar equipment and oxygen gas.

In the process of etching the flattening insulator 11, the resist, layer is completely removed. The silicone oxide layer was removed by the reactive ion etching method (RIE) using $CF_4$ gas, thereby getting a contact hole pattern. After ITO (indiumtin oxide) transparent electrode film (pixel electrode 12) was coated thereon, patterning was provided to form a transparent pixel electrode in contact with the semiconductor layer (channel layer) 3. The oriented film 13 was coated thereon, and was rubbed. After that, the other transparent glass substrate (second substrate 200) provided with a 4-micron wide light proof strip (black matrix 16) corresponding to the contact hole 10 of the first substrate was laminated thereon. Liquid crystal was filled between two substrates to provide sealing and to form a liquid crystal layer 14. A liquid crystal display produced through this process exhibited no leakage of light from the light proof portion, and black display contrast was as good as 290. Furthermore, there was no coloring in the white display mode, and uniform images were displayed.

[Embodiments 2 ~ 8] [Reference Examples 1 ~ 4]

Experiments have been carried out under the same conditions as those of the Embodiment 1, except that carboxylic acid dianhydride component and diamine component were changed.

Table 1 shows types of carboxylic acid dianhydride component and diamine component, their volume of blending and the flattening insulator characteristics.

Flattening rate P can be defined by the following equation when the initial level difference is $\Delta H$, and that on the film surface is $\Delta h$ after formation of film on the level difference:

$$P = 100 \times (1 - \Delta h/\Delta H)$$

The value of flattening rate P of Table 1 has been calculated by forming the same film as that of the Embodiment 1 on the substrate of Figure 3 and measuring the level difference on the surface thereof. Coloring at the contrast and white display portion have been measured by creating the same liquid crystal display as that of the first Embodiment.

In all of Embodiments 1 ~ 8, transmittivity at 420 nm is 85% or more, and flattening rate is 40 % or more with the contrast of 85 or more, exhibiting excellent display characteristics without the white display section being colored.

Especially in Embodiments 1, 2, 5 and 6, the transmittivity was 91% or more, and the flattening rate was 80% or more with the contrast of 260 or more, when $Ar_1$ is (I) or (II) $Ar_2$ was (IV) or (V). Excellent display characteristics was exhibited without the white display section being colored. In the first and second Embodiments, use of (I) for $Ar_1$ provides excellent display characteristics without the white display section being colored, where transmittivity is 92% or more, and flattening rate is 90% or more with a high contrast of 240 or more. The first Reference Example employs the typical polyimide PIX-1500 (by Hitachi Chemical Co., Ltd.) as an LSI insulator.

Table 1

| Embodiment | Carboxylic dianhdride (mol) | Diamine (mol) | Transmittivity* (%) | Flattening rate (%) | Contrast | Coloring of white display portion |
|---|---|---|---|---|---|---|
| 1st embodiment | ODPA (0.10) | mDDSO (0.10) | 95 | 92 | 290 | None |
| 2nd embodiment | ODPA (0.10) | pDDSO (0.10) | 92 | 90 | 275 | None |
| 3rd embodiment | ODPA (0.10) | bisAPAF (0.10) | 97 | 55 | 135 | None |
| 4th embodiment | ODPA (0.10) | DMAP (0.10) | 90 | 55 | 135 | None |
| 5th embodiment | BPDA (0.10) | mDDSO (0.10) | 96 | 84 | 240 | None |
| 6th embodiment | BPDA (0.10) | pDDSO (0.10) | 91 | 87 | 250 | None |
| 7th embodiment | BPDA (0.10) | bisAPF (0.10) | 87 | 39 | 85 | None |
| 1st reference example | PLX-1500 | | 60 | 22 | 30 | Applied |
| 2nd reference example | BPDA (0.10) | TMPDA (0.10) | 74 | 22 | 30 | Applied |
| 3rd reference example | BPDA (0.10) | bisAPAF (0.10) | 55 | 40 | 85 | Applied |
| 4th reference example | BPDA (0.10) | DDE (0.10) | 47 | 22 | 30 | Applied |
| 8th embodiment | 6FDA (0.10) | bisAPF (0.10) | 98 | 3 | 95 | None |

*: Transmittance at 420 nm
ODPA: 3, 3', 4, 4"-oxydiphthalic dianhydride
BAD: 3, 3', 4, 4'-biphenyl tetracarboxylic dianhydride (BPDA)
BTDA: 3, 3', 4, 4'-benzophenone tetracarboxylic dianhydride (BPDA)
mDDSO: 3, 3'-diaminodiphenylsulfon
pDDSO: 4, 4'-diaminodiphenylsulfon
bisAPAF: 2, 2-bis(3-amino-4-hydroxyphenyl)hexafluoro propane
DMAP: 2, 2'-dimethyl-4, 4'-diamino biphenyl
bisAPF: 2, 2'-bis(3-eminophenyl))hexafluoro propane
DDE: 4, 4'-diaminodiphenyl ether
TMPDA: 1, 4'-diamino-2, 3, 5, 6-tetramethyl benzene

[Embodiment 9]

After 3, 3', 4, 4'-oxydiphthalic dianhydride (ODPA) (0.10 mol) was dissolved in maleic acid anhydride, 3, 3'-diaminodiphenylsulfon (m-DDSO) (0.09 mol) was gradually added to it under cooling by ice, and was left to react with each other for five hours. Then 4-aminostylene (AM) (0.02 mol) was added thereto and was made to react with each other for three hours, thereby obtaining plastic composition.

Said polyamic acid solution was coated on the quartz substrate by spin coating method, and was dried on a

hot plate at 80 degrees Celsius for 3 minutes. Then it was heated on the hot plate having a temperature of 350 degrees Celsius for ten minutes and was cured. The obtained film was 2-microns thick. Measurement of the visible ultraviolet absorption spectrum of said film revealed that the transmittivity was 90% or more at the wavelength from 420 nm to 900 nm (a measuring limit of the instrument). The transmittivity was 94% at the wavelength of 420 nm. Then the flattening characteristics of said plastic composition was measured in the same way as the Embodiment 1, and the flattening rate was 94%. Flattening characteristics in the Embodiment 9 have been improved over the Embodiment 1 where corresponding crosslinking component is not included. This has demonstrated that excellent flatness is ensured when used as the flattening insulator of the liquid crystal display, and that black display contrast is satisfactory without light leakage from the light proof unit. It has also revealed that uniform display image can be ensured without coloring in the white display mode.

Furthermore, said insulator was dipped in monoethanol amine (MEA) as resist stripper at 60 degrees Celsius for one minute, and the film thickness before and after this dipping was measured by a probing type film thickness measuring instrument to check for resistance. It has been shown there is no change in film thickness before and after dipping into MEA, and resistance against MEA has been verified. This has revealed that the resist as an etching mask can be used without using the inorganic film. The film was dipped in 502A (resist stripper by Tokyo Ohka Kogyo Co., Ltd.) at 95 degrees Celsius for one minute, and the film thickness before and after the dipping was measured. It has been shown there is no change in film thickness before and after dipping into 502A, and resistance against 502A has been verified. In Table 2 the percentage of film thickness subsequent to dipping into the resist stripper with respect to that prior to dipping is shown as resistance against the resist stripper.

[Embodiments 1 0~11]

Experiments have been carried out under the same conditions as those of the Embodiment 9, except that carboxylic acid dianhdride component and diamine component were changed.

Table 2

| Embodiment | Carboxylic dianhdride (mol) | Diamine (mol) | Cross-linking agent (mol) | Transmittivity (%) | Flattening rate (%) | Resistance against 502A (%) |
|---|---|---|---|---|---|---|
| 9th embodiment | ODPA (0.10) | mDDSO (0.09) | AM (0.02) | 94 | 94 | 100 |
| 10th embodiment | ODPA (0.10) | pDDSO (0.09) | AM (0.02) | 92 | 94 | 100 |
| 11th embodiment | ODPA (0.06), BPDA (0.04) | mDDSO (0.09) | AM (0.02) | 96 | 94 | 100 |
| 12th embodiment | BPDA (0.10) | mDDSO (0.09) | AM (0.02) | 96 | 85 | 100 |
| AM: 4-aminostylene | | | | | | |

Table 2 shows the result of these experiments. The flattening rate was kept at 94% by addition of crosslinking agent in all cases, exhibiting a further improvement of the flattening performance and greater resistance against resist stripper. As high flattening rate as that in Embodiment 9 was obtained in the Embodiment 11 where carboxylic acid dianhdride (40 mol %) was replaced by BODA.

In the Embodiments 9~12 where AM was used as crosslinking agent, excellent resistance against resist stripper was verified; resistance against resist stripper 502A was also shown to be superb.

[Reference Examples 5~10]

AM used in Embodiments 9 ~ 11 was replaced by 3-ethynylaniline, and resin was synthesized in the similar manner to get plastic compositions for Reference Examples 5 ~ 8.

After m-DDSO (0.10 mol) was dissolved in N-methyl pyrrolidone to be made into solution, ODPA (0.09 mol) was gradually added to it under cooling by ice, and was left to react with each other for five hours. Then maleic acid anhydride (0.02 mol) was added thereto and was made to react with each other for three hours, thereby obtaining plastic composition for Reference Example 6.

After m-DDSO(0.10 mol) was dissolved in N-methyl pyrrolidone to be made into solution, ODPA (0.05 mol)

and 3, 3', 4, 4'-biphenyl tetracarboxylic acid dianhdride (BPDA)(0.04 mol) were gradually added to it under cooling by ice, and was left to react with each other for five hours. Then maleic acid anhydride (MA) (0.02 mol) was added thereto and was made to react with each other for three hours, thereby obtaining plastic composition for Reference Example 9.

MA used in Reference Examples 6 and 9 was replaced by 5-norbornel-2, 3-dicarboxylic dianhdride (NA), and resin was synthesized in the similar manner to get plastic compositions for Reference Examples 7 and 10.

Table 3 shows the result of evaluating these flattening characteristics in a manner similar to the Embodiment 1, and the result of studying the resistance against resist stripper in a manner similar to Embodiment 9. It indicates that resistance against the resist stripper 502A cannot be gained by use of any crosslinking agent.

Table 3

| Embodiment | Carboxylic dianhdride (mol) | Diamine (mol) | Flattening rate (%) | Crosslinking agent (mol) | Resistance against 502A (%) |
|---|---|---|---|---|---|
| 5th reference example | ODPA (0.10) | mDDSO (0.09) | 94 | EA (0.02) | 0 |
| 6th reference example | ODPA (0.09) | mDDSO (0.09) | 94 | MA (0.02) | 0 |
| 7th reference example | ODPA (0.09) | mDDSO (0.09) | 94 | NA (0.02) | 0 |
| 8th reference example | ODPA (0.06) BPDA (0.04) | mDDSO (0.09) | 94 | EA (0.02) | 0 |
| 9th reference example | ODPA (0.05) BPDA (0.04) | mDDSO (0.10) | 94 | MA (0.02) | 0 |
| 10th reference example | ODPA (0.05) BPDA (0.04) | mDDSO (0.10) | 94 | NA (0.02) | 0 |
| EA: 3-ethylene aniline<br>MA: Maleic anhydride<br>MA: 5-norbornel-2, 3-dicarboxylic anhydride<br>MEA: Monoethanol amine | | | | | |

[Embodiment 13]

The plastic composition according to Embodiment 1 1 is coated on the passivation film 10 of the liquid crystal display shown in Figure 1, and the flattening insulator 11 was formed to ensure that the film is 2 microns thick in the concave portion. Irregularities on the surface of the flattening insulator 11 in this case surface were 0.04 micron. About 3-micron thick normal positive resist was coated thereon, and the contact hole was exposed and developed. Based on this resist pattern used as a mask, the flattening insulator was patterned according to reactive ion etching (RIE) method using oxygen gas. The remaining resist layer was removed by MEA to obtain the intended contact hole pattern. A pixel electrode 12 was formed thereon using the ITO, and a liquid crystal display was created wherein the top 10 of the hole was provided with a 4-micron wide light proof band (black matrix 16). The contrast of this display is as good as 320. Uniform image was displayed without coloring in the white display mode.

[Embodiment 14]

The polyimide film used for the visible ultraviolet absorption spectrum in the Embodiment 1 was exposed to 10,000,000 luces of visible light using the metal halide lamp as a light source for 1,000 hours. Then the visible ultraviolet absorption spectrum was measured again. After exposure to light, the spectrum was found to be unchanged. This has demonstrated that the liquid crystal display using the polyimide of the Embodiment 1 has an excellent resistance against light.

[Embodiment 15]

A similar light resistance test was conducted replacing the polyimide by that of the Embodiment 11. Transmittivity at 420 nm was 94% both before and after exposure to light. This has demonstrated that the liquid crystal display using the polyimide of Embodiment 1 1 has an excellent resistance against light.

[Reference Example 11]

Benzocyclobutene (by Dow Chemical) was coated on the quartz substrate use in the Embodiment 1. After rise of temperature from the room temperature to 250 degrees Celsius in 90 minutes in an inactive atmosphere of an atmospherically controllable curing furnace, it was kept for 60 minutes to be cooled naturally to get a 2-micron thick benzocyclobutene film. The visible ultraviolet absorption spectrum of this film was measured to find out a transmittivity of 91% at 420 nm. This film was exposed to light in a manner similar to Embodiment 1 4 to observe the changes of the visible ultraviolet absorption spectrum. It has been found out that 80% reduction was observed when it was exposed to light for 50 hours. The liquid crystal display using benzocyclobutene was found to have problems in resistance against light.

The liquid crystal display according to the present invention has a high degree of transparency in the visible light area, and is provided with an insulator excellent in flattening characteristics as a flattening insulator. This provides a display screen at a high contrast with the minimum deterioration of picture quality.

Furthermore, the plastic composition according to the present invention has an particularly high degree of transparency in the visible area, and has excellent flattening characteristics. Being very resistant against the resist stripper, it is suited for use as a flattening insulator of the liquid crystal display.

## Claims

**1.** A liquid crystal display comprising

(1) a first substrate (100) and second substrate (200) holding a liquid crystal layer in-between,
(2) a thin film transistor (23) on said first substrate,
(3) a pixel electrode (12) on the surface of said liquid crystal layer located on the side of said first substrate,
(4) a flattening insulator (11) between said pixel electrode and said thin film transistor, and
(5) a contact hole (30) on said flattening insulator for connection of said pixel electrode with said thin film transistor, wherein said contact hole is used for electric connection between said pixel electrode and said thin film transistor;

said liquid crystal display further **characterized in that** said flattening insulator consists of a plastic composition containing polymer which has a structural unit expressed by the general formula (1) (where $Ar_1$ in the formula is selected from among (I), (II) and (III) and can be used independently or in combination; and $Ar_2$ is selected from among (IV), (V), (VI), (VII) and (VIII), and can be used independently or in combination, with "I" representing an integer of $3 \leq I \leq 1000$).

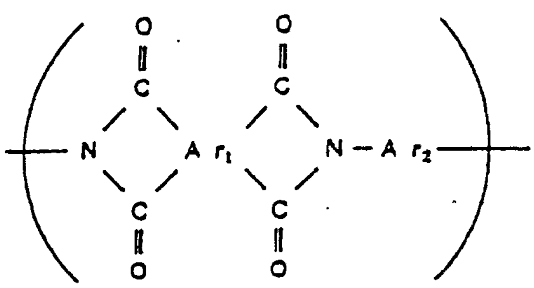

(1)

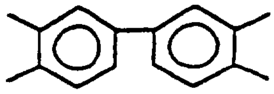

(I)

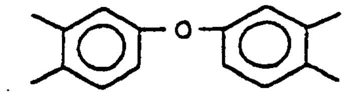

(II)

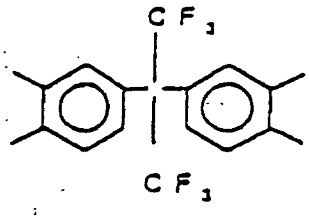

(III)

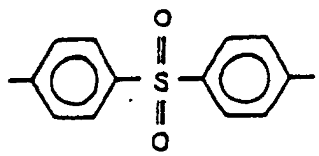

(IV)

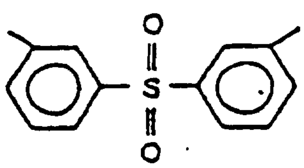

(V)

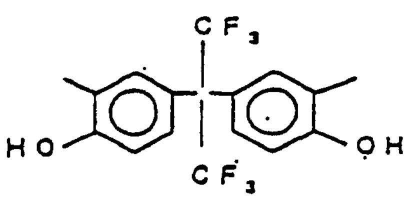

(VI)

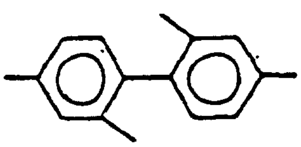

(VII)

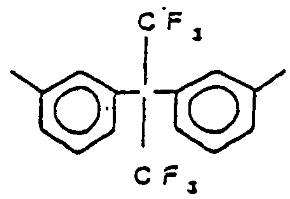

(VIII)

2. A liquid crystal display according to Claim 1 **characterized in that** said flattening insulator is formed of the plastic composition where Ar of said general formula (1) is selected from said (I) and (II), and $Ar_2$ is selected from said (IV) and (V).

3. A liquid crystal display according to Claim 2 **characterized in that** 50 mol % or more of $Ar_1$ of said general formula (1) consists of said (I).

4. A liquid crystal display comprising

(1) a first substrate (100) and second substrate (200) holding a liquid crystal layer in-between,
(2) a thin film transistor (23) on said first substrate,
(3) a pixel electrode (12) on the surface of said liquid crystal layer located on the side of said first substrate,
(4) a flattening insulator (11) between said pixel electrode and said thin film transistor, and
(5) a contact hole (30) on said flattening insulator for connection of said pixel electrode with said thin film transistor, wherein said contact hole is used for electric connection between said pixel electrode and said thin film transistor;

said liquid crystal display further **characterized in that** said flattening insulator consists of the thermoset polymer which has a structural unit expressed by the general formula (2) or (3) (where $Ar_1$ in the formula is selected from among (I), (II) and (III) and can be used independently or in combination; and $Ar_2$ is selected from among (IV), (V), (VI), (VII) and (VIII) and can be used independently or in combination; m and n are integers of $2 \leq m, n \leq 100$, and X represents a base having a polymerizable multiple bond).

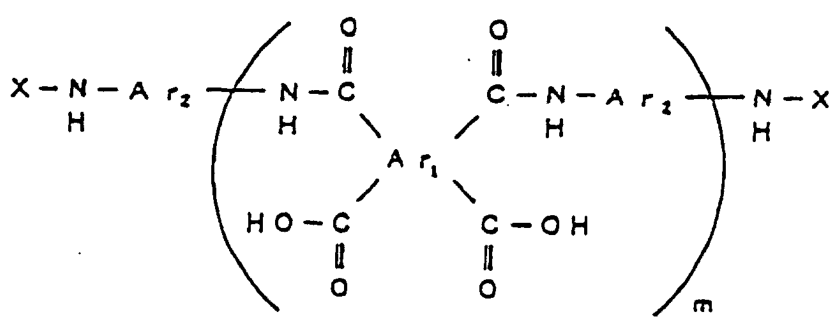

(2)

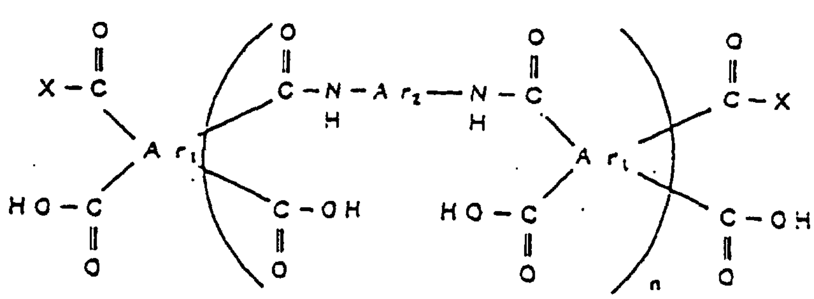

(3)

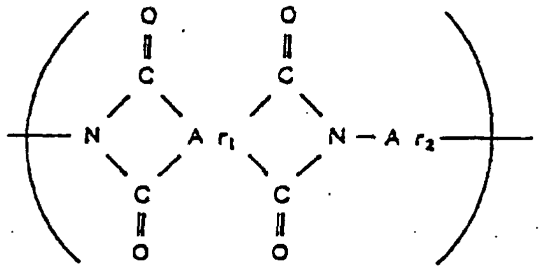

(1)

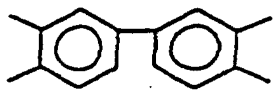

(I)

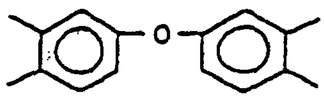

(II)

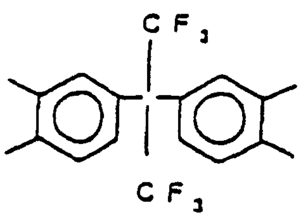

(III)

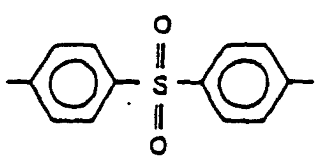

(IV)

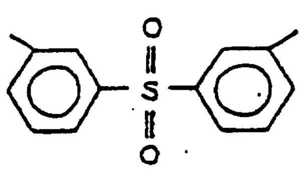

(V)

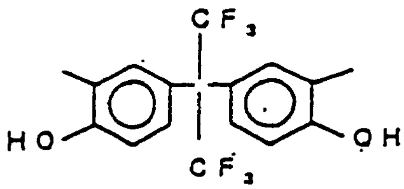

(VI)

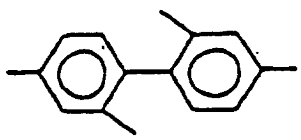

(VII)

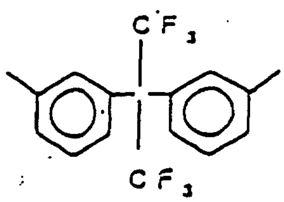

(VIII)

**5.** A liquid crystal display according to Claim 4 further **characterized in that** said flattening insulator comprises the plastic composition where $Ar_1$ in the general formula (2) or (3) is selected from (I) and (II), and $Ar_2$ is selected from (IV) or (V).

**6.** A liquid crystal display according to Claim 5 further **characterized in that** 50 mol % or more of $Ar_1$ of said general formula (2) or (3) consists of said (I).

**7.** A liquid crystal display according to Claim 4 further **characterized in that** "X" of said general formula (2) or (3) consists of the following (IX):

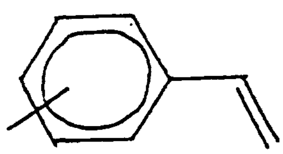

(IX)

**8.** A plastic composition comprising the thermoset polymer which has a structural unit expressed by the general formula (2) or (3) (where $Ar_1$ in the formula is selected from among (I), (II) and (III) and can be used independently or in combination; and $Ar_2$ is selected from among (IV), (V), (VI), (VII) and (VIII) and can be used independently or in combination; m and n are integers of $2 \leq m, n \leq 100$, and X represents a base having a polymerizable multiple bond).

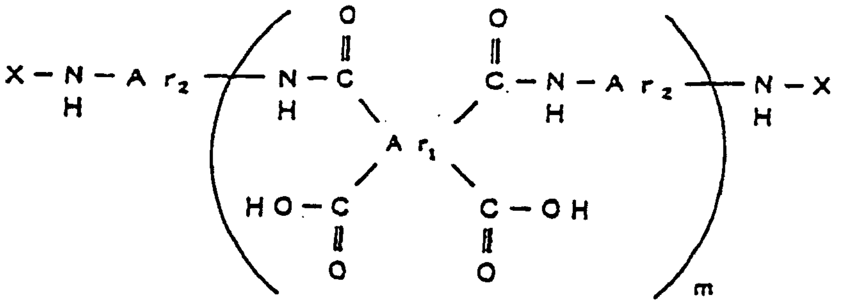

(2)

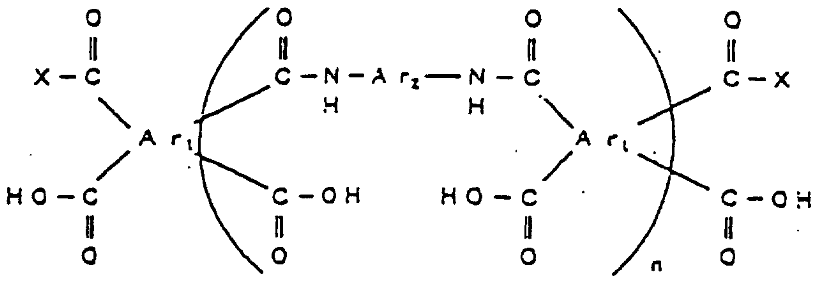

(3)

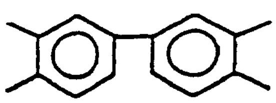

(I)

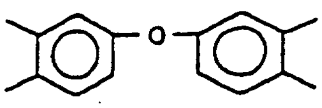

(II)

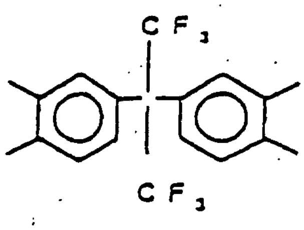

(III)

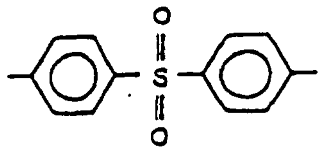

(IV)

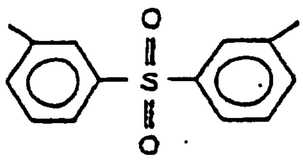

(V)

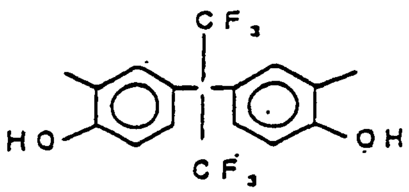

(VI)

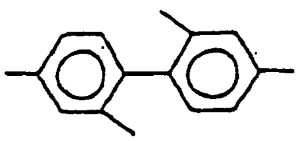

(VII)

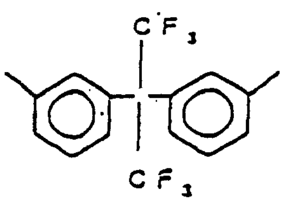

(VIII)

**9.** A plastic composition according to Claim 8 further **characterized in that** $Ar_1$ in the general formula (2) or (3) is selected from (I) and (II), and $Ar_2$ is selected from (IV) or (V).

**10.** A plastic composition according to Claim 9 further **characterized in that** 50 mol % or more of $Ar_1$ of said general formula (2) or (3) consists of said (I).

FIG. 1

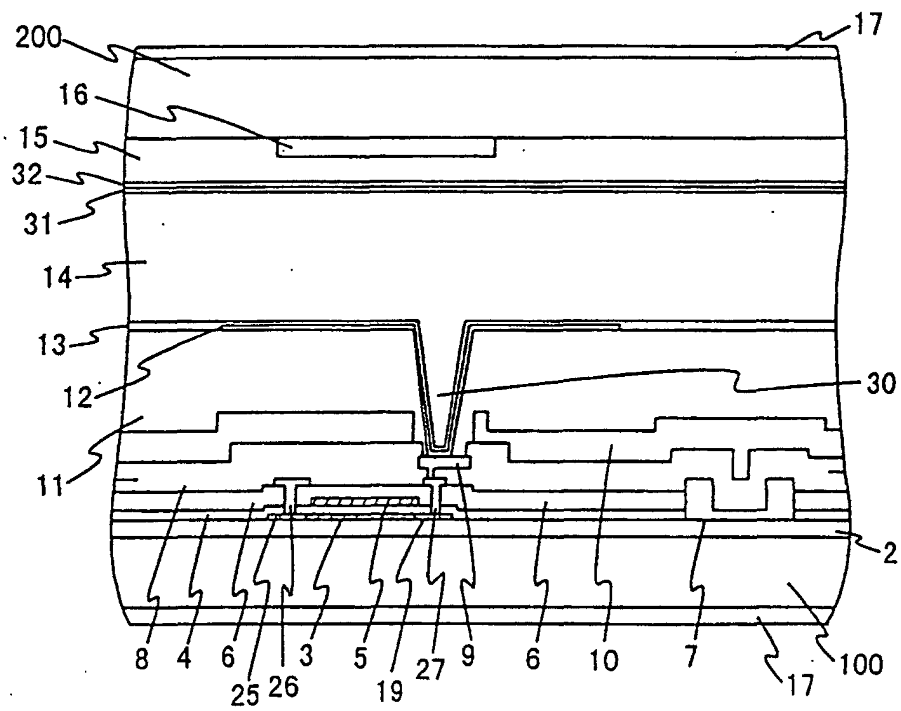

FIG. 2

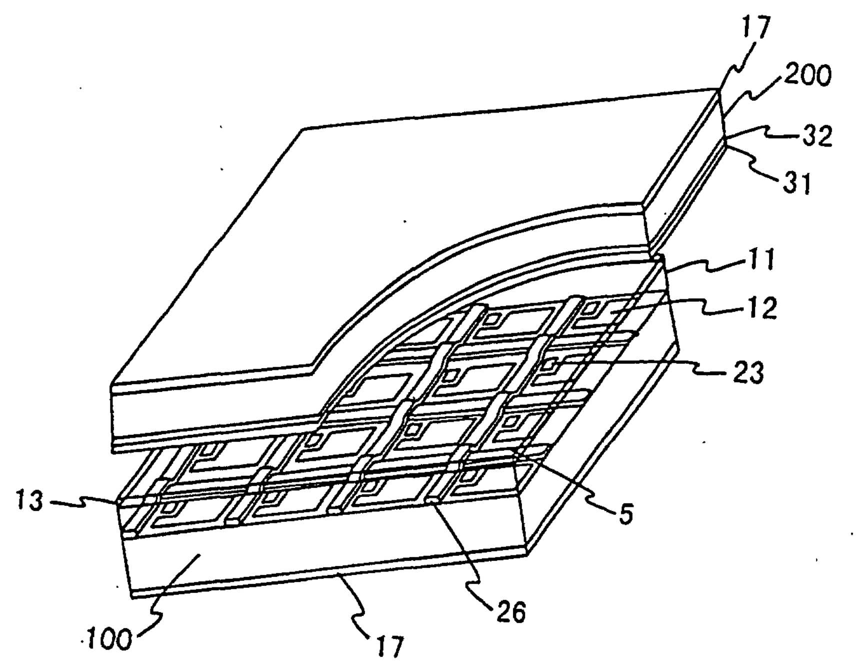


FIG. 3

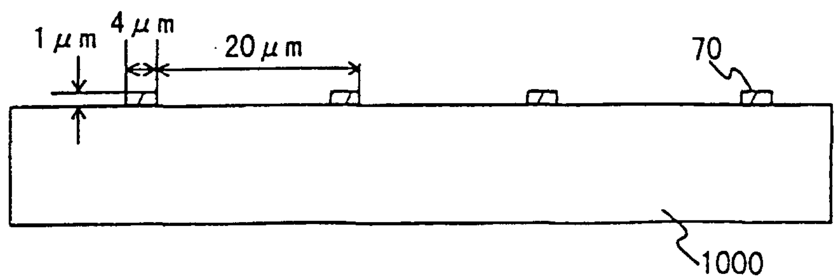

## INTERNATIONAL SEARCH REPORT

International application No.
PCT/JP99/06718

**A. CLASSIFICATION OF SUBJECT MATTER**
Int.Cl[7] G02F1/1333

According to International Patent Classification (IPC) or to both national classification and IPC

**B. FIELDS SEARCHED**

Minimum documentation searched (classification system followed by classification symbols)
Int.Cl[7] G02F1/1333, C08G73/10, C08L79/08

Documentation searched other than minimum documentation to the extent that such documents are included in the fields searched
Jitsuyo Shinan Koho 1922-1996
Kokai Jitsuyo Shinan Koho 1971-2000

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 11-125812, A (Sumitomo Bakelite Company, Limited. ), 11 May, 1999 (11.05.99) (Family: none) | 1-9 |
| A | JP, 11-106509, A (UNITIKA Ltd.), 20 April, 1999 (20.04.99) (Family: none) | 1-9 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 February, 2000 (22.02.00) | 07 March, 2000 (07.03.00) |

| Name and mailing address of the ISA/ | Authorized officer |
|---|---|
| Japanese Patent Office | |
| Facsimile No. | Telephone No. |

Form PCT/ISA/210 (second sheet) (July 1992)